# EUROPÄISCHE PATENTANMELDUNG

(11) **EP 3 804 881 A1**
(43) Veröffentlichungstag der Anmeldung: **14.04.2021**
(21) Anmeldenummer: 20198910.0
(22) Anmeldetag: 29.09.2020
(51) Int. Cl.: B22F 3/00, B22F 3/105, B29C 64/118, B29C 64/209, B33Y 10/00, B33Y 30/00, B33Y 80/00, C06B 21/00, C06B 45/12, F02K 9/12, F02K 9/24

(54) **3D-DRUCKVERFAHREN UND 3D-DRUCKVORRICHTUNG**

(30) Priorität: 11.10.2019 DE 102019007092
(71) Anmelder: MBDA Deutschland GmbH, 86529 Schrobenhausen (DE)
(72) Erfinder: Wagner, Dieter, 85591 Vaterstetten (DE)
(74) Vertreter: Isarpatent

(57) **Zusammenfassung**

Ein 3D-Druckverfahren zur additiven Fertigung einer Treibladung für ein Festkörpertriebwerk umfasst schichtweises Ablegen eines extrudierfähigen Modelliermaterials in Materiallagen, wobei das extrudierfähige Modelliermaterial zumindest zwei unterschiedliche aushärtbare Treibstoffgemische umfasst, wobei in ersten Bereichen der Materiallagen ein erstes aushärtbares Treibstoffgemisch und in zweiten Bereichen der Materiallagen, die sich von den ersten Bereichen unterscheiden, ein zweites aushärtbares Treibstoffgemisch abgelegt wird, wobei die ersten Bereiche und die zweiten Bereiche in den Materiallagen zur Einstellung eines vorgegebenen Schubverlaufs des Festkörpertriebwerks angeordnet werden; Aushärten des extrudierfähigen Modelliermaterials in den Materiallagen zur Bildung der Treibladung; und Ablegen eines Zündmaterials in den Materiallagen zur Bildung eines Zünders zur Zündung der Treibladung des Festkörpertriebwerks.

## Beschreibung

Die vorliegende Erfindung betrifft ein 3D-Druckverfahren zur additiven Fertigung einer Treibladung für ein Festkörpertriebwerk. Ferner betrifft die vorliegende Erfindung eine 3D-Druckvorrichtung zur additiven Fertigung einer Treibladung für ein Festkörpertriebwerk mit einem derartigen 3D-Druckverfahren.

Bei generativen bzw. additiven Fertigungsverfahren, auch allgemein als "3D-Druckverfahren" bezeichnet, werden ausgehend von einem digitalisierten geometrischen Modell eines Objekts ein oder mehrere Ausgangsmaterialien sequentiell in Lagen übereinandergeschichtet und ausgehärtet. So wird beispielsweise bei der Schmelzschichtung (Englisch: "Fused Deposition Modeling", FDM) ein Bauteil schichtweise aus einem Modelliermaterial, beispielsweise einem Kunststoff oder einem Metall, aufgebaut, indem das Modelliermaterial in fließfähiger oder allgemeiner in extrudierfähiger Form aus einer Düse ausgepresst und auf eine Unterlage aufgebracht wird, wodurch sich nach Abkühlung ein festes, zusammenhängendes Bauteil ergibt. 3D-Drucken bietet außergewöhnliche Designfreiheit und erlaubt es unter anderem Objekte mit überschaubaren Aufwand herzustellen, welche mit herkömmlichen Methoden nicht oder nur unter erheblichem Aufwand herstellbar wären. Aus diesem Grund sind 3D-Druckverfahren derzeit weit verbreitet im Industriedesign, in der Automobilindustrie, der Luft- und Raumfahrtindustrie oder generell in der industriellen Produktentwicklung, in der eine ressourceneffiziente Prozesskette zur bedarfsgerechten Klein- und Großserienfertigung individualisierter Bauteile eingesetzt wird.

Mitunter wird vorgeschlagen, Treibladungen für Festkörpertriebwerke mit derartigen oder ähnlichen extrusionsbasierten 3D-Druckverfahren herzustellen, siehe beispielsweise die Druckschrift Chandru et al., "Additive Manufacturing of Solid Rocket Propellant Grains," Journal of Propulsion and Power, Band 34, Nr. 4, 2018. Diese Verfahren bieten Vorteile gegenüber herkömmlichen Verfahren, bei welchen gezielte Schubverläufe von Festkörpertriebwerken nur mit hohem Aufwand möglich sind. Typischerweise werden Treibladungen für Festkörpertriebwerke in derartigen herkömmlichen Verfahren in speziellen, kostenintensiven Formwerkzeugen in Form gebracht. Häufig ist es zudem notwendig, zunächst Teiltreibladungen herzustellen, die dann in weiteren Arbeitsschritten nachbearbeitet und erst zu finalen Treibladungen zusammengesetzt werden müssen. Dies macht die entsprechenden herkömmlichen Verfahren noch zeitaufwendiger und fehleranfälliger.

Vor diesem Hintergrund liegt der vorliegenden Erfindung die Aufgabe zugrunde, flexiblere Lösungen für die Herstellung von Treibladungen mit additiven Verfahren zu finden.

Erfindungsgemäß wird diese Aufgabe gelöst durch ein 3D-Druckverfahren mit den Merkmalen des Patentanspruchs 1 und durch eine 3D-Druckvorrichtung mit den Merkmalen des Patentanspruchs 8.

Demgemäß ist ein 3D-Druckverfahren zur additiven Fertigung einer Treibladung für ein Festkörpertriebwerk vorgesehen. Das 3D-Druckverfahren umfasst schichtweises Ablegen eines extrudierfähigen Modelliermaterials in Materiallagen, wobei das extrudierfähige Modelliermaterial zumindest zwei unterschiedliche aushärtbare Treibstoffgemische umfasst, wobei in ersten Bereichen der Materiallagen ein erstes aushärtbares Treibstoffgemisch und in zweiten Bereichen der Materiallagen, die sich von den ersten Bereichen unterscheiden, ein zweites aushärtbares Treibstoffgemisch abgelegt wird, wobei die ersten Bereiche und die zweiten Bereiche in den Materiallagen zur Einstellung eines vorgegebenen Schubverlaufs des Festkörpertriebwerks angeordnet werden; Aushärten des extrudierfähigen Modelliermaterials in den Materiallagen zur Bildung der Treibladung; und Ablegen eines Zündmaterials in den Materiallagen zur Bildung eines Zünders zur Zündung der Treibladung des Festkörpertriebwerks.

Ferner ist eine 3D-Druckvorrichtung zur additiven Fertigung einer Treibladung für ein Festkörpertriebwerk mit einem erfindungsgemäßen 3D-Druckverfahren vorgesehen.

Ferner ist ein computerlesbares Medium vorgesehen, auf welchem computerausführbare Anweisungen gespeichert sind, die bei Ausführung mittels einer datenverarbeitenden Vorrichtung die datenverarbeitende Vorrichtung dazu veranlassen, ein erfindungsgemäßes 3D-Druckverfahren auszuführen.

Eine der vorliegenden Erfindung zugrunde liegende Idee besteht darin, beliebige Schubverläufe von Triebwerken ohne Formwerkzeuge zu realisieren, indem mehrere Treibstoffgemische mit unterschiedlichen Eigenschaften gezielt mit einem additiven Verfahren schichtweise abgelegt und dabei variiert werden. Durch entsprechende Anordnung bzw. Verteilung von Bereichen mit den jeweiligen Treibstoffgemischen können unterschiedliche Schubverläufe eingestellt werden. Die entsprechende Verteilung der Treibstoffgemische in den Materialschichten bzw. Materiallagen kann beispielsweise mit einer entsprechenden Software für den gewünschten bzw. vorgegebenen Schubverlauf berechnet werden. Hierbei hat sowohl die räumliche Verteilung der Treibstoffgemische als auch deren zeitliche Abbrennfolge einen Einfluss auf den Schubverlauf. Hinzu tritt hierbei der beim Abbrand auftretende Gewichtsverlust. Beide Aspekte können von der Software im Zuge der Aufstellung des vorgegebenen Schubverlaufs berücksichtigt werden.

Mit dem erfindungsgemäßen Verfahren bzw. der erfindungsgemäßen Vorrichtung lassen sich unterschiedlichste Eigenschaften in einer Treibladung in einem einfachen zusammenhängenden Verfahren erzeugen. 3D-Druckverfahren sind insbesondere vorteilhaft, da sie die Herstellung von dreidimensionalen Komponenten in urformenden Verfahren ermöglichen, ohne spezielle, auf die äußere Form der Komponenten abgestimmte Fertigungswerkzeuge zu benötigen. Dadurch werden hocheffiziente, Material sparende und Zeit sparende Herstellungsprozesse für Bauteile und Komponenten ermöglicht. Besonders vorteilhaft sind derartige 3D-Druckverfahren für die Herstellung von Treibladungen, da auch komplexe Geometrien beispielsweise mit hinterschnittigen Geometrien ohne großen Aufwand umsetzbar sind. Weiterhin können derart einfach zusätzliche Materialien in eine Treibladung eingebracht werden.

3D-Druckverfahren im Sinne der vorliegenden Anmeldung umfassen alle generativen bzw. additiven Fertigungsverfahren, bei welchen auf der Basis von geometrischen Modellen Objekte vordefinierter Form aus formlosen Materialien wie Flüssigkeiten oder formneutralen Halbzeugen wie etwa band- oder drahtförmigem Material mittels chemischer und/oder physikalischer Prozesse in einem speziellen generativen Fertigungssystem hergestellt werden. 3D-Druckverfahren im Sinne der vorliegenden Anmeldung verwenden dabei additive Prozesse, bei denen das Ausgangsmaterial schichtweise in vorgegebenen Formen sequentiell aufgebaut wird. Insbesondere umfassen derartige 3D-Druckverfahren extrusionsbasierte additive Verfahren.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann das extrudierfähige Modelliermaterial derart abgelegt werden, dass eine inhomogene Treibstoffversteilung in der Treibladung entsteht.

Gemäß einer Weiterbildung können die unterschiedlichen aushärtbaren Treibstoffgemische unterschiedliche Schubleistungen und/oder Abbrandgeschwindigkeiten aufweisen.

Durch entsprechende vorteilhafte Wahl sowohl der jeweiligen Schubleistung und/oder der jeweiligen Abbrandgeschwindigkeit kann der zeitliche Verlauf des Schubes sowie dessen räumliche und zeitliche Leistungsverteilung eingestellt werden. Beispielsweise kann ein erstes Treibstoffgemisch mit einer ersten Schubleistung für eine erste Schubphase in vorderen Schichten der Treibladung bezogen auf eine Ausstoßrichtung positioniert werden. Darüber kann ein zweites Treibstoffgemisch mit einer zweiten Schubleistung in hinteren Schichten der Treibladung bezogen auf die Ausstoßrichtung vorgesehen sein, wobei die zweite Schubleistung kleiner als die erste Schubleistung konfiguriert sein kann. In diesem Fall liefert die Treibladung somit einen zweistufigen Schubverlauf mit einer höheren Schubleistung in einer ersten Phase der zeitlichen Brennfolge. Alternativ oder zusätzlich kann beispielsweise das zweite Treibstoffgemisch mit kontinuierlich abnehmender Schubleistung ausgelegt sein, sodass eine gleichmäßige Geschwindigkeit des Flugkörpers erreicht wird (eine Gewichtsabnahme erhöht die Schubleistung).

Gemäß einer Weiterbildung kann das extrudierfähige Modelliermaterial weiterhin ein aushärtbares inertes Material umfassen. Das aushärtbare inerte Material kann in dritten Bereichen der Materiallagen abgelegt werden, die sich von den ersten Bereichen und den zweiten Bereichen unterscheiden. Das inerte Material kann nach Aushärtung inerte Bereiche in der Treibladung definieren.

Zusätzlich zu Treibstoffgemischen mit unterschiedlichen Eigenschaften können somit auch gezielt inerte, d.h. nicht energetische bzw. reaktive Materialien bzw. Stoffe in die Treibladung eingebracht werden. Beispielsweise können derart Bereiche ausgespart werden, in denen Treibstoffgemische nicht benötigt werden. In einem konkreten Beispiel kann der Schubverlauf somit gezielt unterbrochen und/oder eingedämmt werden.

Prinzipiell kann das Zündmaterial ebenfalls in extrudierfähiger Form verarbeitet sowie additiv abgelegt und ausgehärtet werden. Beispielsweise kann die 3D-Druckvorrichtung hierzu einen dedizierten Druckkopf aufweisen. Alternativ oder zusätzlich kann das Zündmaterial jedoch ebenso in fester Form auf, unter und/oder neben bereits abgelegten Schichten aus Treibstoff aufgebracht werden.

Gemäß einer Weiterbildung kann das extrudierfähige Modelliermaterial unmittelbar in eine Triebwerkshülle des Festkörpertriebwerks abgelegt werden.

In dieser vorteilhaften Weiterbildung wird die Treibladung somit unmittelbar in die Triebwerkshülle und damit das Festkörpertriebwerk gedruckt. Alternativ kann es natürlich ebenso vorgesehen sein, zunächst eine Treibladung zu drucken und diese zu einem späteren Fertigungszeitpunkt in eine Triebwerkshülle eines Festkörpertriebwerks einzubringen.

Gemäß einer Weiterbildung kann das extrudierfähige Modelliermaterial zumindest ein drittes aushärtbares Treibstoffgemisch umfassen. Das dritte aushärtbare Treibstoffgemisch kann eine höhere Abbrandgeschwindigkeit als das erste aushärtbare Treibstoffgemisch und das zweite aushärtbare Treibstoffgemisch aufweisen. Das dritte aushärtbare Treibstoffgemisch kann derart in den Materiallagen abgelegt werden, dass ein Zündkanal mit dem dritten Treibstoffgemisch in der Treibladung gebildet wird.

In dieser Weiterbildung können somit gezielt Kanäle mit hoher Abbrandgeschwindigkeit in die Treibladung eingebracht werden. Damit wird beispielsweise eine homogenere Zündung ermöglicht, die durch einen Zünder initiiert sein kann (beispielsweise kann der Zünder anliegendend zu dem Zündkanal positioniert sein).

Gemäß einer Weiterbildung können durch Materialaussparungen in den Materiallagen materialfreie Kanäle in der Treibladung gebildet werden.

Inerte Bereiche in der Treibladung können somit einerseits durch gezielte Einbringung inerter Materialien erreichet werden. Andererseits können auch gezielt Hohlräume vorgesehen werden, die ebenfalls den Schubverlauf und/oder die Schubleistung beeinflussen können.

Gemäß einer Weiterbildung kann die 3D-Druckvorrichtung einen Druckkopf aufweisen. Der Druckkopf kann einen Materialmischer zur Vermischung eines Treibstoffs mit einem Bindemittel, einem Härter und/oder einem Zusatzstoff zu einem Treibstoffgemisch umfassen. Der Druckkopf kann ferner eine Druckdüse zum Ablegen des Treibstoffgemisches umfassen. Alternativ kann jedoch auch direkt ein vorgemischtes Treibstoffgemisch verwendet werden.

Gemäß einer Weiterbildung kann das Bindemittel ein UV-härtendes Bindemittel aufweisen. Hierbei handelt es sich um ein vorteilhaftes Beispiel für einen geeigneten Aushärtemechanismus. Alternativ oder zusätzlich wird der zuständige Fachmann je nach Anwendung weitere Härteprozesse berücksichtigen, wie beispielsweise mechanische, z.B. mittels Druck, chemische, z.B. mittels Härter, physikalische, z.B. mittels Wärme, Zeit, chemische usw.

In diesem Fall kann die 3D-Druckvorrichtung eine UV-Beleuchtung umfassen, mit deren Hilfe das UV-härtende Bindemittel und damit das entsprechende Treibstoffgemisch ausgehärtet werden kann, beispielsweise unmittelbar nach Austritt aus einer Druckdüse der 3D-Druckvorrichtung.

Gemäß einer Weiterbildung kann die 3D-Druckvorrichtung für jedes Treibstoffgemisch und/oder für ein aushärtbares inertes Material einen separaten Druckkopf aufweisen. Prinzipiell kann jedoch ebenso ein einzelner Druckkopf dazu ausgebildet sein, unterschiedliche Treibstoffgemisch und ggf. auch das inerte Material zu drucken.

Gemäß einer Weiterbildung kann die 3D-Druckvorrichtung weiterhin eine Ausrichtungseinrichtung umfassen. Die Ausrichtungseinrichtung kann dazu ausgebildet sein, eine Triebwerkshülle des Festkörpertriebwerks zum unmittelbaren Ablegen des extrudierfähigen Modelliermaterials in die Triebwerkshülle auszurichten. Beispielsweise kann die Ausrichtungseinrichtung dazu ausgebildet sein, die Triebwerkshülle zu kippen, zu rotieren und/oder entlang mehrerer Raumachsen auszurichten.

Dies ist besonders vorteilhaft, um die Treibladung direkt in die Triebwerkshülle zu drucken. Beispielsweise kann die 3D-Druckvorrichtung ein Ablage entlang mindestens dreier Achsen ermöglichen. Zusätzlich kann die Ausrichtungseinrichtung nun die Triebwerkshülle um eine weitere Achse rotieren, um das Einbringen der Treibladung in die Triebwerkshülle zu erleichtern. Dem Fachmann wird hierbei klar sein, dass die 3D-Druckvorrichtung noch weitere Freiheitsgrade bzw. Achsen aufweisen kann. Beispielsweise kann der Druckkopf um eine fünfte Achse neig- bzw. kippbar ausgebildet sein, um das Einbringen der Treibladung weiter zu erleichtern.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: schematische Ansicht einer 3D-Druckvorrichtung zur additiven Fertigung einer Treibladung für ein Festkörpertriebwerk gemäß einer Ausführungsform der Erfindung; und
- Fig. 2: schematisches Ablaufdiagramm eines 3D-Druckverfahrens mit der 3D-Druckvorrichtung aus Fig. 1.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

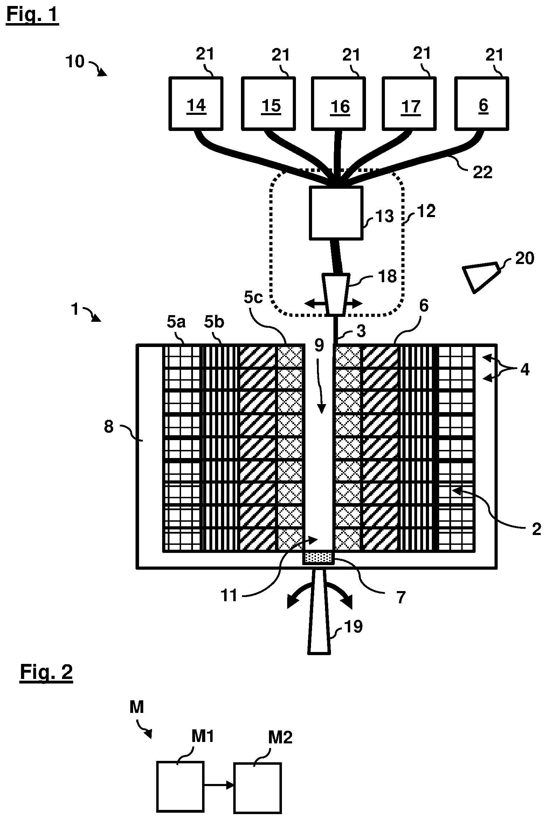

Figur 1 zeigt eine schematische Ansicht einer 3D-Druckvorrichtung 10 gemäß einer Ausführungsform der Erfindung. Ein schematisches Ablaufdiagramm für ein entsprechendes 3D-Druckverfahren M mit der 3D-Druckvorrichtung 10 ist in Fig. 2 abgebildet. Das 3D-Druckverfahren M und die 3D-Druckvorrichtung 10 dienen der additiven Fertigung einer Treibladung 2 für ein Festkörpertriebwerk 1 (vgl. Fig. 1), z.B. eines Flugkörpers wie einer Feststoffrakete oder dergleichen.

Das 3D-Druckverfahren M umfasst grundlegend unter M1 schichtweises Ablegen eines extrudierfähigen Modelliermaterials 3 in Materiallagen 4, wobei das extrudierfähige Modelliermaterial 3 unmittelbar in eine Triebwerkshülle 8 des Festkörpertriebwerks 1 abgelegt wird. Weiterhin umfasst das 3D-Druckverfahren M unter M2 Aushärten des extrudierfähigen Modelliermaterials 3 in den Materiallagen 4 zur Bildung der Treibladung 2.

Allgemein umfassen extrudierfähige Modelliermaterialien hierbei sämtliche Materialien, die mit einer geeigneten Düse extrudiert werden können. Insbesondere umfassen extrudierfähige Modelliermaterialien fließfähige Materialien. Weiterhin sind jedoch ebenso nicht fließfähige Materialien einsetzbar, die derart aufbereitet werden können (z.B. mittels Erwärmen), dass sie extrudierfähig werden. Hierbei kann die Viskosität des Materials für die Wahl der konkret verwendeten Extruderdüse berücksichtigt werden.

Hierbei umfasst das extrudierfähige Modelliermaterial 3 in dieser Ausführungsform beispielhaft drei unterschiedliche aushärtbare Treibstoffgemische 5a-5c: ein erstes Treibstoffgemisch 5a, ein zweites Treibstoffgemisch 5b und ein drittes Treibstoffgemisch 5c. Das erste aushärtbare Treibstoffgemisch 5a wird hierbei in ersten Bereichen der Materiallagen 4 abgelegt. Entsprechend wird das zweite aushärtbare Treibstoffgemisch 5b in zweiten Bereichen der Materiallagen 4 und das dritte aushärtbare Treibstoffgemisch 5c in dritten Bereichen der Materiallagen 4 abgelegt.

Die ersten, zweiten und dritten Bereiche sind hierbei jeweils unterschiedliche Bereiche innerhalb der Treibladung 2 in den Materiallagen 4. Eine beispielhafte schematische Anordnung ist in Fig. 1 gezeigt. Es versteht sich hierbei, dass die gezeigte Ausführung lediglich schematisch und beispielhaft zu verstehen ist und in anderen Ausführungsformen der Erfindung andere Anordnungen der Treibstoffgemische 5a-5c möglich sind. Ferner können alternativ lediglich zwei unterschiedliche Treibstoffgemische oder auch mehr als drei Treibstoffgemische eingesetzt werden.

Die ersten, zweiten und dritten Bereiche werden in den Materiallagen 4 zur Einstellung eines vorgegebenen Schubverlaufs des Festkörpertriebwerks 1 angeordnet und ausgebildet. Durch geeignete Wahl der Eigenschaften der Treibstoffgemische 5a-5c und deren Anordnung können prinzipiell beliebige Schubverläufe des Festkörpertriebwerks 1 eingestellt werden. Beispielsweise kann eine inhomogene Treibstoffverteilung eingestellt werden, um den Schubverlauf gezielt zu beeinflussen. Ferner können Eigenschaften der Treibstoffgemische 5a-5c wie beispielsweise Schubleistung und/oder Abbrandgeschwindigkeit variiert werden, um den Schub weitergehend zu manipulieren.

Um die Flexibilität für die Einstellung des Schubverlaufs des Festkörpertriebwerks 1 weiter zu verbessern, sieht das 3D-Druckverfahren M ferner die Ablage eines aushärtbaren inerten, d.h. nicht energetischen bzw. reaktiven, Materials 6 vor, welches in vierten Bereichen der Materiallagen 4 abgelegt wird (vgl. Fig. 1).

In ähnlicher Weise können zudem Materialaussparungen 11 in den Materiallagen 4 belassen werden, beispielsweise um materialfreie Kanäle zu bilden, die den Abbrandverlauf bzw. die Abbrandgeschwindigkeit weiter beeinflussen können.

In der konkreten beispielhaften Ausführung gemäß Fig. 1 ist mittig in der Treibladung 2 entlang einer Symmetrieachse der Treibladung 2 eine kanalförmige Materialaussparung 11 belassen, die einen Zündkanal 9 bildet. Hierzu ist ein Zündmaterial 7 an einem unteren Ende des Zündkanals 9 abgelegt worden. Ferner umgibt das dritte Treibstoffgemisch 5c den Zündkanal 9 entlang einer Mantelfläche des Zündkanals 9. Die Abbrandgeschwindigkeit des dritten Treibstoffgemischs 5c ist hierbei deutlich höher gewählt, als dasjenige der ersten und zweiten Treibstoffgemische 5a, 5b, um eine möglichst schnelle und insbesondere gleichförmige Zündung der Treibladung 2 zu erreichen.

Die konkrete Verteilung sowie die Eigenschaften der Treibstoffgemische 5a-5c, des inerten Materials 6 sowie der Materialaussparungen 11 kann hierbei mit einer entsprechenden Software für einen gewünschten Schubverlauf berechnet werden.

Ausgeführt wird das 3D-Druckverfahren von der 3D-Druckvorrichtung 10 in Fig. 1. Die 3D-Druckvorrichtung 10 umfasst einen Druckkopf 12 mit einem Materialmischer 13 zum Mischen der Treibstoffgemische 5a-5c sowie eine Druckdüse 18 zum Ablegen der Treibstoffgemische 5a-5c. Hierzu umfasst die 3D-Druckvorrichtung 10 mehrere Materialbehälter 21 für die einzelnen Bestandteile der Treibstoffgemische 5a-5c. Konkret umfasst die 3D-Druckvorrichtung 10 in der Ausführung gemäß Fig. 1 einen Materialbehälter 21 für einen Treibstoff 14, einen Materialbehälter 21 für ein Bindemittel 15, einen Materialbehälter 21 für einen Härter 16 und einen Materialbehälter 21 für einen Zusatzstoff 17. Ferner ist ein Materialbehälter 21 für das inerte Material 6 vorgesehen. Die Materialbehälter 21 sind nun mit dem Materialmischer 13 über flexible Förderleitungen 22 verbunden, um diesen mit den entsprechenden Materialien für die Mischung eines bestimmten Treibstoffgemischs 5a-5c zu versorgen.

Es versteht sich hierbei, dass die konkrete Anzahl an Materialbehältern 21 und Materialien in Fig. 1 rein beispielhaft zu verstehen ist und der Fachmann je nach Anwendung mehr oder weniger unterschiedliche Materialien vermischen bzw. verwenden kann, z.B. mehrere Treibstoffe, Bindemittel, Härter und/oder Zusatzstoffe, bzw. bestimmte Komponenten ebenso weglassen kann. Beispielsweise kann ein Bindemittel 15 mit einem UV-härtendem Binder vorgesehen sein. Stattdessen kann das abgelegte Modelliermaterial 3 mit einer UV-Beleuchtung 20 bestrahlt werden.

Ferner wird in der beispielhaften Ausführung gemäß Fig. 1 ein einzelner Druckkopf 12 verwendet, um sämtliche Materialien zu drucken, insbesondere die unterschiedlichen Treibstoffgemische 5a-5c. In alternativen Ausführungen kann der Fachmann jedoch ebenso mehrere Druckköpfe bereitstellen, beispielsweise für jedes Treibstoffgemisch 5a-5c einen separaten Druckkopf.

Der Druckkopf 12 in der Ausführung in Fig.1 weist hierbei zumindest drei Bewegungsfreiheitsgrade auf, z.B. entlang der drei Raumachsen, um das Modelliermaterial 3 möglichst flexibel in die Triebwerkshülle 8 ablegen zu können.

In der Ausführung in Fig. 1 ist hierzu ferner eine Ausrichtungseinrichtung 19 vorgesehen, welche dazu ausgebildet ist, die Triebwerkshülle 8 des Festkörpertriebwerks 1 zum unmittelbaren Ablegen des extrudierfähigen Modelliermaterials 3 in die Triebwerkshülle 8 auszurichten. Beispielsweise kann die Ausrichtungseinrichtung 19 dazu ausgebildet sein, die Triebwerkshülle 8 um eine weitere Achse zu rotieren. Zusätzlich kann der Druckkopf 12 beispielsweise gegenüber der Triebwerkshülle 8 verkippt werden.

Im Ergebnis wird somit eine 3D-Druckvorrichtung 10 bzw. ein 3D-Druckverfahren M bereitgestellt, welches die Herstellung praktisch beliebiger Schubverläufe in einem einheitlichen, kostengünstigen und einfachen Verfahren ermöglicht.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet.

Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Festkörpertriebwerk
- 2: Treibladung
- 3: extrudierfähiges Modelliermaterial
- 4: Materiallage
- 5a-c: aushärtbares Treibstoffgemisch
- 6: inertes Material
- 7: Zündmaterial
- 8: Triebwerkshülle
- 9: Zündkanal
- 10: 3D-Druckvorrichtung
- 11: Materialaussparung
- 12: Druckkopf
- 13: Materialmischer
- 14: Treibstoff
- 15: Bindemittel
- 16: Härter
- 17: Zusatzstoff
- 18: Druckdüse
- 19: Ausrichtungseinrichtung
- 20: UV-Beleuchtung
- 21: Materialbehälter
- 22: flexible Förderleitung
- M: 3D-Druckverfahren
- M1-M2: Verfahrensschritte

## Patentansprüche

1. 3D-Druckverfahren (M) zur additiven Fertigung einer Treibladung (2) für ein Festkörpertriebwerk (1), mit:
schichtweises Ablegen (M1) eines extrudierfähigen Modelliermaterials (3) in Materiallagen (4), wobei das extrudierfähige Modelliermaterial (3) zumindest zwei unterschiedliche aushärtbare Treibstoffgemische (5a-5c) umfasst, wobei in ersten Bereichen der Materiallagen (4) ein erstes aushärtbares Treibstoffgemisch (5a) und in zweiten Bereichen der Materiallagen (4), die sich von den ersten Bereichen unterscheiden, ein zweites aushärtbares Treibstoffgemisch (5b) abgelegt wird, wobei die ersten Bereiche und die zweiten Bereiche in den Materiallagen (4) zur Einstellung eines vorgegebenen Schubverlaufs des Festkörpertriebwerks (1) angeordnet werden;
Aushärten (M2) des extrudierfähigen Modelliermaterials (3) in den Materiallagen (4) zur Bildung der Treibladung (2); und
Ablegen eines Zündmaterials (7) in den Materiallagen (4) zur Bildung eines Zünders zur Zündung der Treibladung (2) des Festkörpertriebwerks (1).

2. 3D-Druckverfahren (M) nach Anspruch 1, wobei das extrudierfähige Modelliermaterial (3) derart abgelegt wird, dass eine inhomogene Treibstoffversteilung in der Treibladung (2) entsteht.

3. 3D-Druckverfahren (M) nach einem der Ansprüche 1 und 2, wobei die unterschiedlichen aushärtbaren Treibstoffgemische (5a-5c) unterschiedliche Schubleistungen und/oder Abbrandgeschwindigkeiten aufweisen.

4. 3D-Druckverfahren (M) nach einem der Ansprüche 1 bis 3, wobei das extrudierfähige Modelliermaterial (3) weiterhin ein aushärtbares inertes Material (6) umfasst, welches in dritten Bereichen der Materiallagen (4) abgelegt wird, die sich von den ersten Bereichen und den zweiten Bereichen unterscheiden, wobei das inerte Material (6) nach Aushärtung inerte Bereiche in der Treibladung (2) definiert.

5. 3D-Druckverfahren (M) nach einem der Ansprüche 1 bis 4, wobei das extrudierfähige Modelliermaterial (3) unmittelbar in eine Triebwerkshülle (8) des Festkörpertriebwerks (1) abgelegt wird.

6. 3D-Druckverfahren (M) nach einem der Ansprüche 1 bis 5, wobei das extrudierfähige Modelliermaterial (3) zumindest ein drittes aushärtbares Treibstoffgemisch (5c) umfasst, welches eine höhere Abbrandgeschwindigkeit als das erste aushärtbare Treibstoffgemisch (5a) und das zweite aushärtbare Treibstoffgemisch (5b) aufweist, wobei das dritte aushärtbare Treibstoffgemisch (5c) derart in den Materiallagen (4) abgelegt wird, dass ein Zündkanal (9) mit dem dritten Treibstoffgemisch (5c) in der Treibladung (2) gebildet wird.

7. 3D-Druckverfahren (M) nach einem der Ansprüche 1 bis 6, wobei durch Materialaussparungen (11) in den Materiallagen (4) materialfreie Kanäle in der Treibladung (2) gebildet werden.

8. 3D-Druckvorrichtung (10), welche zur additiven Fertigung einer Treibladung (2) für ein Festkörpertriebwerk (1) mit einem 3D-Druckverfahren (M) nach einem der Ansprüche 1 bis 7 ausgebildet ist.

9. 3D-Druckvorrichtung (10) nach Anspruch 8, wobei die 3D-Druckvorrichtung (10) einen Druckkopf (12) aufweist, welcher umfasst:
einen Materialmischer (13) zur Vermischung eines Treibstoffs (14) mit zumindest einem aus der Gruppe umfassend ein Bindemittel (15), einen Härter (16) und einen Zusatzstoff (17) zu einem Treibstoffgemisch (5a-5c) ; und
eine Druckdüse (18) zum Ablegen des Treibstoffgemisches (5a-5c).

10. 3D-Druckvorrichtung (10) nach einem der Ansprüche 8 und 9, wobei das Bindemittel (15) ein UV-härtendes Bindemittel aufweist.

11. 3D-Druckvorrichtung (10) nach einem der Ansprüche 8 bis 10, wobei die 3D-Druckvorrichtung (10) für jedes Treibstoffgemisch (5a-5c) und/oder für ein aushärtbares inertes Material (6) einen separaten Druckkopf (12) aufweist.

12. 3D-Druckvorrichtung (10) nach einem der Ansprüche 8 bis 11, weiterhin mit:
einer Ausrichtungseinrichtung (19), welche dazu ausgebildet ist, eine Triebwerkshülle (8) des Festkörpertriebwerks (1) zum unmittelbaren Ablegen des extrudierfähigen Modelliermaterials (3) in die Triebwerkshülle (8) auszurichten.

13. Computerlesbares Medium, auf welchem computerausführbare Anweisungen gespeichert sind, die bei Ausführung mittels einer datenverarbeitenden Vorrichtung die datenverarbeitende Vorrichtung dazu veranlassen, ein 3D-Druckverfahren (M) nach einem der Ansprüche 1 bis 7 auszuführen.
